# FASCICULE DE BREVET EUROPEEN

(11) **EP 3 589 516 B1**
(45) Date de publication et mention de la délivrance du brevet: **24.08.2022**
(21) Numéro de dépôt: 18711224.8
(22) Date de dépôt: 26.02.2018
(51) Int. Cl.: B60Q 1/28, B60Q 1/26, B60Q 1/00, F21Y 113/17, F21Y 113/20, F21Y 105/12, F21S 41/14, B60Q 3/60, F21S 43/145, F21S 43/20

(54) **DISPOSITIF LUMINEUX POUR VEHICULE AUTOMOBILE COMPRENANT UNE SOURCE DE LUMIERE COMPORTANT UNE PLURALITÉ D'ÉLEMENTS ÉMISSIFS**
BELEUCHTUNGSEINRICHTUNG FÜR EIN KRAFTFAHRZEUG MIT EINER LICHTQUELLE MIT MEHREREN EMITTIERENDEN ELEMENTEN
LIGHTING DEVICE FOR MOTOR VEHICLE COMPRISING A LIGHT SOURCE HAVING A PLURALITY OF EMITTING ELEMENTS

(30) Priorité: 28.02.2017 FR 1751638
(43) Date de publication de la demande: 08.01.2020
(73) Titulaire: Valeo Vision, 93012 Bobigny Cedex (FR)
(72) Inventeur: ALBOU, Pierre, 93012 Bobigny Cedex (FR); GODBILLON, Vincent, 75011 Paris (FR)
(74) Mandataire: Valeo Visibility
(86) Numéro de dépôt international: PCT/EP2018/025046
(87) Numéro de publication internationale: WO 2018/157973

(56) Documents cités:
- EP-A1- 2 161 494
- EP-A1- 2 846 081
- EP-A1- 2 927 051
- DE-A1-102010 056 313
- DE-U1- 20 315 175
- FR-A1- 3 030 995
- GB-A- 2 473 311
- US-A1- 2008 013 329
- US-A1- 2015 243 853
- US-A1- 2015 367 776

## Description

La présente invention concerne le domaine technique de l'éclairage et/ou de la signalisation et elle concerne en outre, dans une application préférée, mais non exclusive, le domaine des dispositifs lumineux, avant ou arrière, pour véhicule automobile.

Le document DE 203 15 175 U1 décrit un dispositif d'éclairage multifonction pour véhicule automobile. Le document GB 2 473 211 A décrit un dispositif lumineux destiné à produire un éclairage d'ambiance aux caractéristiques variables.

Le domaine de l'éclairage est réglementé de telle sorte que les modules d'éclairage conçus par les constructeurs automobiles donnent un éclairage correspondant à des normes très précises évaluées pour la sécurité des usagers de la route. La réglementation impose notamment les faisceaux lumineux résultants tant dans leur intensité que dans leur couleur. Notamment, les véhicules automobiles ont l'obligation d'être équipés de feux de position, et notamment à l'arrière, afin de signaler leur position et leur déplacement aux autres utilisateurs de la route.

Chaque véhicule est également équipé à l'arrière de feux d'indication de freinage, qui s'allument automatiquement lorsqu'une action de freinage est opérée, ou détectée, de manière à signaler aux autres usagers de la route la décélération du véhicule devant eux et le risque que cela peut générer. Là encore, ces indicateurs de freinage sont réglementés quant à la couleur, rouge, qu'ils doivent émettre.

Les acteurs du marché automobile visent de nos jours, pour des soucis de design et d'encombrement du véhicule, à émettre par une même surface d'éclairage différents faisceaux lumineux correspondant chacun à une fonction d'éclairage ou de signalisation spécifique.

De plus avec l'avènement futur des véhicules automobiles autonomes, l'éclairage intérieur des véhicules automobiles prennent de plus en plus d'importance. Ses fonction vont notamment de la liseuse, à l'éclairage sélectif d'une ou plusieurs zones de l'habitacle en passant par l'éclairage d'ambiance ou encore l'affichage de logos.

Dans ce contexte, l'invention vise à proposer un dispositif lumineux qui permet de combiner plusieurs fonctions d'éclairage pour l'émission de leur faisceau respectif à travers une surface de sortie d'éclairage commune, et notamment les fonctions d'indicateur de freinage et de feux de position, ou les fonctions d'éclairage intérieur. Eventuellement l'invention permettra aussi de varier les teintes de blanc émises par chacune des fonctions d'éclairage et/ou de signalisation.

L'invention propose un dispositif lumineux pour véhicule automobile comprenant une source de lumière comportant une pluralité d'éléments émissifs. Par « éléments émissifs », on entend des éléments aptes à émettre des faisceaux lumineux. Les éléments émissifs sont configurés pour former au moins une première zone d'émission et une deuxième zone d'émission adressables sélectivement l'une de l'autre. L'invention comprend également un écran au moins partiellement transparent, à la lumière émise par la source de lumière, qui comprend des premières zones de transmission et des secondes zones de transmission agencées respectivement en vis-à-vis des premières et des deuxièmes zones d'émission. Les premières zones de transmission sont configurées pour diffuser les faisceaux lumineux émis par les premières zones d'émission, les deuxièmes zones de transmission de l'écran étant configurées pour diminuer la divergence du faisceau lumineux émis par les deuxièmes zones d'émission.

Par « diffuser », on entend la capacité pour les premières zones de transmission d'augmenter l'angle d'ouverture des faisceaux lumineux émis par les premières zones d'émission. Les premières zones de transmission permettent alors de disperser plus largement dans l'environnement les faisceaux lumineux qui les traversent, par rapport aux deuxièmes zones de transmission.

Selon une caractéristique de l'invention, les zones d'émission se distinguent par la densité et/ou la hauteur des éléments émissifs les composant. Notamment, la ou les premières zones d'émission, qui correspondent aux premières zones de transmission diffusantes, présentent une densité d'éléments émissifs moins importante que celle des éléments émissifs dans la ou les deuxièmes zones d'émission.

Les éléments émissifs peuvent s'étendre à partir d'un même substrat de croissance. On comprend que, dans le cas d'éléments émissifs s'étendant en saillie d'un substrat, l'intensité lumineuse d'une zone d'émission par rapport à l'autre peut varier en fonction de la densité des éléments émissifs qui la composent ou bien en fonction de la hauteur de ces éléments émissifs, étant entendu que plus forte est la densité des éléments émissifs ou plus haute est la hauteur de ces éléments émissifs, plus intense est la lumière émise par la zone d'émission correspondante. Dans la description qui va suivre, on décrira plus particulièrement la densité variable des éléments émissifs d'une zone d'émission à l'autre, sans que cela soit limitatif d'une application dans laquelle c'est la hauteur de ces éléments émissifs qui varie.

L'invention propose un dispositif lumineux comprenant des zones d'émission dont les intensités lumineuses diffèrent, entre les premières et deuxièmes zones, en raison de la différence de densité d'éléments émissifs dans lesdites zones. Ainsi, le dispositif lumineux selon l'invention est configuré pour émettre au moins deux signaux lumineux dissociés spatialement et d'intensités différentes. De ce fait, l'invention permet avantageusement d'utiliser un seul dispositif lumineux pour émettre deux signaux lumineux aisément distinguables par un observateur. Par « observateur », on entend une personne regardant de face l'écran.

De façon avantageuse, les premières zones de transmission sont agencées sur l'écran de manière à être principalement, de préférence seulement, en face des premières zones d'émission. Les premières zones de transmission permettent d'étaler dans un angle solide élevé les faisceaux lumineux émis par les premières zones d'émission, de sorte à amplifier la différence d'intensité lumineuse perçue par un observateur, entre les faisceaux lumineux traversant les premières et les deuxièmes zones de transmission. L'invention permet de cette façon à un observateur de distinguer au moins deux faisceaux lumineux émis par le dispositif lumineux, un premier faisceau lumineux de faible intensité émis par une première zone d'émission et passant par une première zone de transmission, d'un deuxième faisceau lumineux de forte intensité émis par une deuxième zone d'émission et passant par une deuxième zone de transmission. La différence d'intensité entre le premier et le deuxième faisceau lumineux peut être supérieure à 10, et supérieure à 100 notamment dans le cas d'une application d'un projecteur formant à la fois un feu de position et un feu de jour.

Selon un autre avantage, les premières zones d'émission permettent d'homogénéiser la lumière transmise par l'écran, de sorte à donner l'impression à un observateur d'une source de lumière homogène ou sensiblement homogène lorsque seules les premières zones d'émission sont activées. Par « activer », on entend le fait de permettre à au moins une zone d'émission d'émettre un faisceau de lumière. Ainsi, le dispositif lumineux permet d'émettre à travers un même écran une lumière homogène de faible intensité et/ou plusieurs lumières distinctes de forte intensité. De ce fait, l'invention permet d'utiliser un seul écran pour émettre ces deux types de signaux lumineux, ce qui permet de réduire les dimensions de la source de lumière et donc les dimensions des lanternes comprenant ladite source. C'est pourquoi l'invention propose un dispositif lumineux plus compact par rapport à l'état de la technique. Selon un autre avantage, le dispositif lumineux nécessite un nombre de sources de lumière moins important, ce qui permet de réduire son coût de production. Selon encore un autre avantage, le dispositif lumineux permet de rendre le faisceau créé par les premières zones visible depuis des angles plus élevés par rapport à l'axe véhicule que ceux permettant l'observation du faisceau créé par les secondes zones.

Selon différentes caractéristiques de l'invention, prises seules ou en combinaison, on peut prévoir que :
- les premières zones de transmission de l'écran peuvent comprendre des éléments diffusants, afin d'accroître l'impression de lumière homogène décrite ci-dessus ; par les termes « éléments diffusants », on entend tous moyens permettant de dévier les rayons lumineux du faisceau dans des directions plus ou moins aléatoires ;
- les éléments diffusants sont présents dans l'écran et/ou à la surface de l'écran ; à titre d'exemple, les éléments diffusants peuvent être réalisés sous la forme d'un grainage à la surface de l'écran ;
- les premières zones de transmission peuvent être translucides, c'est-à-dire, transmettre les faisceaux lumineux sans que l'on puisse distinguer nettement les contours des premières zones d'émission ; bien entendu, on choisira l'une ou l'autre de ces alternatives, en fonction des dimensions des zones d'émission, des dimensions des zones de transmission et de leur écartement respectif, de manière à donner l'impression à un observateur que le dispositif lumineux émet une lumière homogène à la surface de l'écran, lorsque seules les premières zones d'émission sont activées ;
- les deuxièmes zones de transmission de l'écran peuvent être transparentes aux faisceaux lumineux émis par les deuxièmes zones d'émission de la source de lumière ; par « transparent », on entend la capacité pour les deuxièmes zones de transmission de laisser passer les faisceaux lumineux de sorte qu'un observateur puisse distinguer nettement les contours des deuxièmes zones d'émission ; éventuellement, un ou plusieurs caches peuvent être interposés entre les premières et les deuxièmes zones d'émission, de manière à s'assurer que seuls les faisceaux émis par les premières zones d'émission traversent les premières zones de transmission.
- les deuxièmes zones de transmission de l'écran qui sont configurées pour diminuer la divergence du faisceau lumineux émis par les deuxièmes zones d'émission peuvent comprendre des microlentilles ; on permet ainsi d'accentuer l'intensité lumineuse perçue par un observateur regardant les deuxièmes zones de transmission et ainsi d'augmenter encore la différence d'intensité lumineuse entre les premières et les deuxièmes zones d'émission dans un champ angulaire donné, en pratique près de l'axe du véhicule ;
- les premières zones d'émission peuvent être entourées par les deuxièmes zones d'émission ; cela permet avantageusement d'obtenir un effet de source lumineuse plus homogène au niveau des premières zones de transmission lorsque seules les premières zones d'émission sont activées ; de préférence, l'ensemble des premières zones d'émission sont alignées ou agencées en anneaux concentriques ;
- les premières zones d'émission de la source de lumière qui sont activables indépendamment des deuxièmes zones d'émission permettent de préserver l'effet d'homogénéité de la source de lumière décrit ci-dessus ; selon un autre avantage, on peut ainsi affecter une fonction différente aux premières et aux deuxièmes zones d'émission ;
- la ou les premières zones d'émission de la source de lumière peuvent émettre un faisceau lumineux d'une première couleur et la ou les deuxièmes zones d'émission peuvent émettre un faisceau lumineux d'une deuxième couleur ;
- la première couleur peut être identique à la seconde couleur ; la première et la seconde couleur peuvent être rouge, notamment dans un contexte où l'on peut associer à l'activation des premières zones d'émission la position du véhicule et à l'activation des deuxièmes zones d'émission son freinage.
- chaque zone d'émission peut comprendre une pluralité d'unité électroluminescentes de dimensions submillimétriques pour émettre un faisceau lumineux ; ainsi, on applique au domaine automobile une technologie consistant à réaliser la partie émettrice de lumière par une pluralité d'unité électroluminescentes que l'on fait croître sur un substrat, pour réaliser une topologie en trois dimensions. Ces unités peuvent prendre la forme de plot ou de bâtonnets. La topologie en trois dimensions de la forme en bâtonnets présente l'avantage de multiplier la surface d'émission lumineuse par rapport aux diodes électroluminescentes connues jusque-là dans le domaine de l'automobile, à savoir des diodes sensiblement planes ; de la sorte, il est possible de fournir à moindre coût de revient une lumière très lumineuse. La topologie en forme de plots permet présente l'avantage de permettre une densité nettement supérieure par rapport aux diodes électroluminescentes connues jusque-là dans le domaine de l'automobile.

Le fait que les unités électroluminescentes soient activables sélectivement, qu'au moins deux groupes d'unités électroluminescentes de la source de lumière soient agencés pour être allumés de manière sélective, et que soit prévu un module de contrôle de l'activation distinct de ces unités, permettant d'allumer ou d'éteindre distinctivement les unités les unes des autres, simultanément ou non, permet la réalisation d'une lumière comprenant des premières et des deuxièmes zones d'émission définies précisément.

De préférence, les unités électroluminescentes s'étendent en saillie d'un même substrat, et ils peuvent notamment être formés directement sur ce substrat. On peut prévoir que le substrat soit à base de silicium ou de carbure de silicium. On comprend que le substrat est à base de silicium dès lors qu'il comporte majoritairement du silicium, par exemple au moins 50% et dans la pratique environ 99%.

Selon une série de caractéristiques propres à la constitution des bâtonnets électroluminescents et à la disposition de ces bâtonnets électroluminescents sur le substrat, on pourra prévoir que, chaque caractéristique pouvant être prise seule ou en combinaison avec les autres :
- chaque bâtonnet présente une forme générale cylindrique, notamment de section polygonale ; on pourra prévoir que chaque bâtonnet ait la même forme générale, et notamment une forme hexagonale ;
- les bâtonnets sont chacun délimités par une face terminale et par une paroi circonférentielle qui s'étend le long d'un axe longitudinal du bâtonnet définissant sa hauteur, la lumière étant émise au moins à partir de la paroi circonférentielle ; cette lumière pourrait également être émise par la face terminale ;
- chaque bâtonnet peut présenter une face terminale qui est sensiblement perpendiculaire à la paroi circonférentielle, et dans différentes variantes, on peut prévoir que cette face terminale est sensiblement plane ou bombée, ou pointue, en son centre ;
- les bâtonnets sont agencés en matrice à deux dimensions, que cette matrice soit régulière, avec un espacement constant entre deux bâtonnets successifs d'un alignement donné, ou que les bâtonnets soient disposés en quinconce ;
- la hauteur d'un bâtonnet est comprise entre 1 et 10 micromètres ;
- la plus grande dimension de la face terminale est inférieure à 2 micromètres ;
- la distance qui sépare deux bâtonnets immédiatement adjacents est au minimum égale à 2 micromètres, et au maximum égale à 100 micromètres.

Selon d'autres caractéristiques, on pourra prévoir que la source de lumière à semi-conducteur comprenant une pluralité de bâtonnets électroluminescents de dimensions submillimétriques comporte en outre une couche d'un matériau polymère formant un encapsulant dans lequel les bâtonnets sont au moins partiellement noyés ; un tel encapsulant est déposé sur le substrat en recouvrement des bâtonnets, et il est avantageux que l'encapsulant s'étende au moins jusqu'à recouvrir le bâtonnet le plus haut. Ce matériau polymère peut être à base de silicone, étant entendu que le matériau polymère est à base de silicone dès lors qu'il comporte majoritairement du silicone, par exemple au moins 50% et dans la pratique environ 99%. La couche de matériau polymère peut comprendre un luminophore ou une pluralité de luminophores excités par la lumière générée par au moins un de la pluralité de bâtonnets. On entend par luminophore, ou convertisseur de lumière, la présence d'au moins un matériau luminescent conçu pour absorber au moins une partie d'au moins une lumière d'excitation émise par une source de lumière et pour convertir au moins une partie de ladite lumière d'excitation absorbée en une lumière d'émission ayant une ou des longueurs d'onde différentes de celle de la lumière d'excitation. Ce luminophore, ou cette pluralité de luminophores, peut être au moins partiellement noyé dans le polymère ou bien disposé en surface de la couche de matériau polymère.

Selon une série de caractéristiques propres à la constitution des plots électroluminescents et à la disposition de ces plots électroluminescents sur le substrat, on pourra prévoir que, chaque caractéristique pouvant être prise seule ou en combinaison avec les autres :
- chaque plot présente une forme générale parallélépipédique, notamment de section carrée ; on pourra prévoir que chaque plot ait la même forme générale, et notamment une forme rectangulaire droite ;
- les plots sont chacun délimités par une face terminale et par une paroi latérale qui s'étend le long d'un axe longitudinal du plots définissant sa hauteur, la lumière étant émise au moins à partir de la face terminale ; cette lumière pourrait également être émise par la paroi latérale ;
- chaque plot peut présenter une face terminale qui est sensiblement perpendiculaire à la paroi latérale, et dans différentes variantes, on peut prévoir que cette face terminale est sensiblement plane ;
- les plots sont agencés en matrice à deux dimensions, que cette matrice soit régulière, avec un espacement constant entre deux plots successifs d'un alignement donné ;
- la longueur et la largeur de la section du plot sont inférieures chacune à 70µm ;

Selon d'autres caractéristiques, on pourra prévoir que la source de lumière à semi-conducteur comprenant une pluralité de plots électroluminescents de dimensions submillimétriques comporte en outre une couche d'un matériau polymère formant un encapsulant dans lequel les plots sont au moins partiellement noyés ; un tel encapsulant est déposé sur le substrat en recouvrement des plots, et il est avantageux que l'encapsulant s'étende au moins jusqu'à recouvrir le plot le plus haut. Ce matériau polymère peut être à base de silicone, étant entendu que le matériau polymère est à base de silicone dès lors qu'il comporte majoritairement du silicone, par exemple au moins 50% et dans la pratique environ 99%. La couche de matériau polymère peut comprendre un luminophore ou une pluralité de luminophores excités par la lumière générée par au moins un de la pluralité de plots. On entend par luminophore, ou convertisseur de lumière, la présence d'au moins un matériau luminescent conçu pour absorber au moins une partie d'au moins une lumière d'excitation émise par une source de lumière et pour convertir au moins une partie de ladite lumière d'excitation absorbée en une lumière d'émission ayant une ou des longueurs d'onde différentes de celle de la lumière d'excitation. Ce luminophore, ou cette pluralité de luminophores, peut être au moins partiellement noyé dans le polymère ou bien disposé en surface de la couche de matériau polymère.

L'invention concerne également un système lumineux, tel un projecteur ou un feu de position ou un système d'éclairage intérieur, pour véhicule automobile, comportant un dispositif lumineux tel que décrit ci-dessus, avec une surface d'éclairage commune à deux fonctions d'éclairage et/ou de signalisation distinctes.

Le système lumineux, notamment feu de position pour véhicule automobile, peut comprendre le dispositif lumineux décrit ci-dessus, notamment quand la ou les premières zones d'émission émettent des faisceaux lumineux de couleur blanche, avec une surface d'éclairage commune avec un feu de jour.

En outre les faisceaux lumineux de couleur blanche émis par le système lumineux pour véhicule automobile peuvent présenter chacun une teinte de blanc distincte. Cette teinte peut être ajustée selon les besoins.

L'invention porte en outre sur un procédé de pilotage , défini dans la revendication 14, d'un dispositif lumineux décrit ci-dessus, dans lequel on réalise une phase d'activation continue des premières zones d'émission et une phase d'activation ponctuelle des deuxièmes zones d'émission. Eventuellement, les premières zones d'émission peuvent rester activées pendant l'allumage des deuxièmes zones d'émission, par exemple lorsque le dispositif lumineux est utilisé dans une lanterne afin de signaler la position et le freinage du véhicule.

D'autres caractéristiques et avantages de la présente invention apparaitront plus clairement à l'aide de la description et des dessins parmi lesquels :
- la figure 1 est une vue arrière d'un véhicule automobile comprenant un feu de position incluant un dispositif lumineux selon l'invention ;
- la figure 2 est une vue de côté d'un dispositif lumineux selon l'invention, rendant visible notamment une source de lumière à semi-conducteur et un écran agencés en travers des rayons émis par cette source ;
- la figure 3 est une représentation schématique, en perspective, d'une partie de la source de lumière à semi-conducteur de la figure 2, dans laquelle on a rendu visible en coupe une rangée d'éléments électroluminescents en saillie d'un substrat ;
- la figure 4 est une illustration schématique de l'agencement d'une partie de la source de lumière de la figure 3 ;
- la figure 5 est une vue en coupe d'un détail d'un mode de réalisation particulier d'une source de lumière à semi-conducteur telle qu'illustrée schématiquement sur la figure 2, dans lequel deux bâtonnets électroluminescents s'étendent en saillie d'un substrat, lesdits bâtonnets électroluminescents étant encapsulés dans une couche protectrice ;
- la figure 6 est une vue de face d'une source de lumière que comporte un dispositif lumineux selon un premier mode de réalisation ;
- la figure 7 illustre la source de lumière de la figure 6, vue en coupe, selon un axe (AA) représenté à la figure 6 ;
- la figure 8 est une vue de face d'un écran que comporte le dispositif lumineux selon le premier mode de réalisation ;
- la figure 9 illustre l'écran de la figure 8, vue en coupe, selon un axe (BB) représenté à la figure 8 ;
- la figure 10 est une vue de face du dispositif lumineux selon le premier mode de réalisation, dans lequel sont empilés axialement l'écran de la figure 8 et la source de la figure 6 ;
- la figure 11 illustre le dispositif lumineux de la figure 10, vu en coupe, selon un axe (CC) représenté à la figure 10 ; et
- la figure 12 est une vue, similaire à celle de la figure 11, illustrant un dispositif lumineux selon un deuxième mode de réalisation.

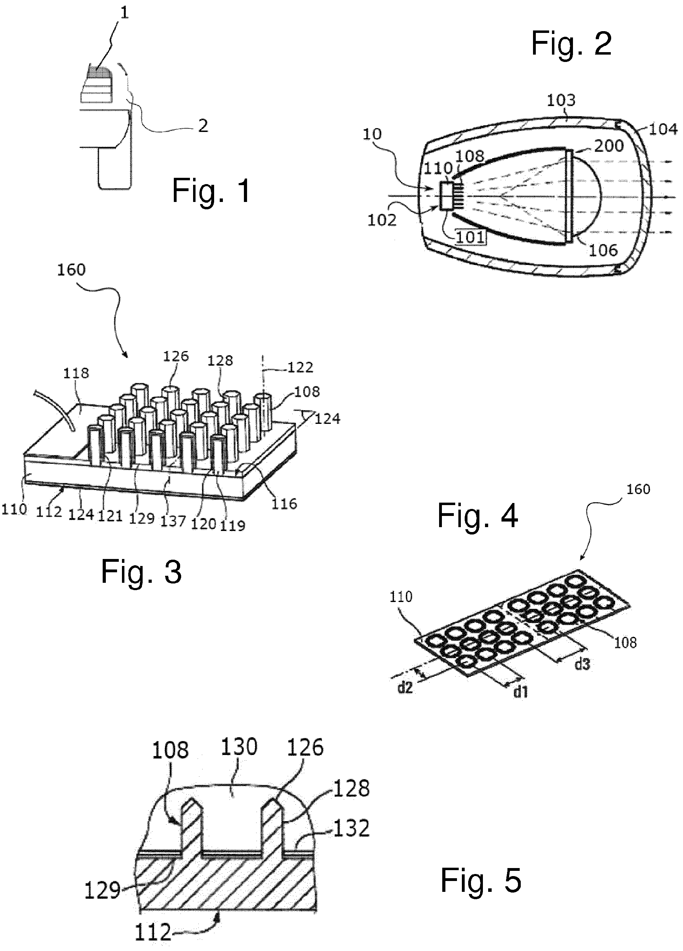

Pour rappel, l'invention vise à proposer un dispositif lumineux pour un véhicule automobile. Comme illustré à la figure 1, le dispositif lumineux peut par exemple être utilisé dans un feu d'éclairage et/ou de signalisation 1 d'un véhicule automobile 2.

Plus précisément, tel qu'illustré à la figure 2, le dispositif lumineux 10 est logé dans le feu de position 1, formée d'un boîtier 103 fermé par une glace 104. Selon le présent exemple, le dispositif lumineux 10 comprend un module de commande 101, une source de lumière 102 pilotée par le module de commande et un écran 200 éclairé par la source de lumière. Si nécessaire, le dispositif lumineux 10 peut également comprendre une optique 106 de mise en forme d'une partie au moins des rayons lumineux émis transmis par l'écran 200.

La source de lumière 102 est une source à semi-conducteur comprenant des unités, ici des bâtonnets, électroluminescentes de dimensions submillimétriques, c'est-à-dire des sources à semi-conducteur en trois dimensions telles que cela sera exposé ci-après, contrairement aux sources classiques en deux dimensions, assimilées à des sources sensiblement planes du fait de leur épaisseur de l'ordre de quelques nanomètres alors qu'une source à bâtonnets électroluminescents présente une hauteur au moins égale au micromètre.

Tel qu'illustré à la figure 3, la source de lumière 102 comprend une pluralité d'éléments émissifs ou bâtonnets électroluminescents 108 de dimensions submillimétriques, que l'on appellera par la suite bâtonnets électroluminescents. Ces bâtonnets électroluminescents 108 prennent naissance sur un même substrat 110. Chaque bâtonnet électroluminescent, ici formé par utilisation de nitrure de gallium (GaN), s'étend perpendiculairement, ou sensiblement perpendiculairement, en saillie du substrat, ici réalisé à base de silicium, d'autres matériaux comme du carbure de silicium pouvant être utilisés sans sortir du contexte de l'invention. À titre d'exemple, les bâtonnets électroluminescents pourraient être réalisés à partir d'un alliage de nitrure d'aluminium et de nitrure de gallium (AlGaN), ou à partir d'un alliage d'aluminium, d'indium et de gallium (AllnGaN).

Le substrat 110 présente une face inférieure 112, sur laquelle est rapportée une première électrode, et une face supérieure 116, en saillie de laquelle s'étendent les bâtonnets électroluminescents 108 et sur laquelle est rapportée une deuxième électrode 118. Différentes couches de matériaux sont superposées sur la face supérieure 116, notamment après la croissance des bâtonnets électroluminescents depuis le substrat ici obtenu par une approche ascendante. Parmi ces différentes couches, on peut trouver au moins une couche de matériau conducteur électriquement, afin de permettre l'alimentation électrique des bâtonnets. Cette couche est gravée de manière à relier tel ou tel bâtonnet entre eux, l'allumage de ces bâtonnets pouvant alors être commandé simultanément par un module de pilotage ici non représenté. On pourra prévoir qu'au moins deux bâtonnets électroluminescents ou au moins deux groupes de bâtonnets électroluminescents de la source de lumière à semi-conducteur sont agencés pour être allumés de manière distincte par l'intermédiaire du système de commande 101.

Les bâtonnets électroluminescents de dimensions submillimétriques s'étirent depuis le substrat et comportent, tel que cela est visible sur la figure 3, chacun étant constitué d'un noyau 119 en nitrure de gallium, autour duquel sont disposés des puits quantiques 120 formés par une superposition radiale de couches de matériaux différents, ici du nitrure de gallium et du nitrure de gallium-indium, et une coque 121 entourant les puits quantiques également réalisée en nitrure de gallium.

Chaque bâtonnet s'étend selon un axe longitudinal 122 définissant sa hauteur, la base 123 de chaque bâtonnet étant disposée dans un plan 124 de la face supérieure 116 du substrat 110.

Les bâtonnets électroluminescents 108 de la source de lumière à semi-conducteur présentent avantageusement la même forme. Ces bâtonnets sont chacun délimités par une face terminale 126 et par une paroi circonférentielle 128 qui s'étend le long de l'axe longitudinal. Lorsque les bâtonnets électroluminescents sont dopés et font l'objet d'une polarisation, la lumière résultante en sortie de la source à semi-conducteur est émise principalement à partir de la paroi circonférentielle 128, étant entendu que l'on peut prévoir que des rayons lumineux sortent également, au moins en petite quantité, à partir de la face terminale 126. Il en résulte que chaque bâtonnet agit comme une unique diode électroluminescente et que la densité des bâtonnets électroluminescents 108 améliore l'émittance de cette source à semi-conducteur.

La paroi circonférentielle 128 d'un bâtonnet 108, correspondant à la coquille de nitrure de gallium, est recouverte par une couche d'oxyde conducteur transparent (OCT) 129 qui forme l'anode de chaque bâtonnet complémentaire à la cathode formée par le substrat. Cette paroi circonférentielle 128 s'étend le long de l'axe longitudinal 122 depuis le substrat 110 jusqu'à la face terminale 126, la distance de la face terminale 126 à la face supérieure 116 du substrat, depuis laquelle prennent naissance les bâtonnets électroluminescents 108, définissant la hauteur de chaque bâtonnet. À titre d'exemple, on prévoit que la hauteur d'un bâtonnet électroluminescent 108 est comprise entre 1 et 10 micromètres, tandis que l'on prévoit que la plus grande dimension transversale de la face terminale, perpendiculairement à l'axe longitudinal 122 du bâtonnet électroluminescent concerné, soit inférieure à 2 micromètres. On pourra également prévoir de définir la surface d'un bâtonnet, dans un plan de coupe perpendiculaire à cet axe longitudinal 122, dans une plage de valeurs déterminées, et notamment entre 1.96 et 4 micromètres carrés.

On comprend que lors de la formation des bâtonnets 108, la hauteur peut être modifiée d'une partie à l'autre d'une même source de lumière, de manière à accroitre la luminance de telle ou telle partie de la source de lumière à semi-conducteur, étant entendu que la luminance augmente lorsque la hauteur des bâtonnets est augmentée.

La forme des bâtonnets électroluminescents 108 peut également varier d'une partie à l'autre d'une même source de lumière, notamment au regard de la section des bâtonnets et/ou de la forme de la face terminale 126. Il a été illustré sur la figure 3 des bâtonnets électroluminescents présentant une forme générale cylindrique, et notamment de section polygonale, ici plus particulièrement hexagonale.

Par ailleurs, la face terminale 126 peut présenter une forme sensiblement plane et perpendiculaire à la paroi circonférentielle, de sorte qu'elle s'étend sensiblement parallèlement à la face supérieure 116 du substrat 110, tel que cela est illustré sur la figure 3, ou bien elle peut présenter une forme bombée ou en pointe en son centre, de manière à multiplier les directions d'émission de la lumière sortant de cette face terminale, tel que cela est illustré sur la figure 5.

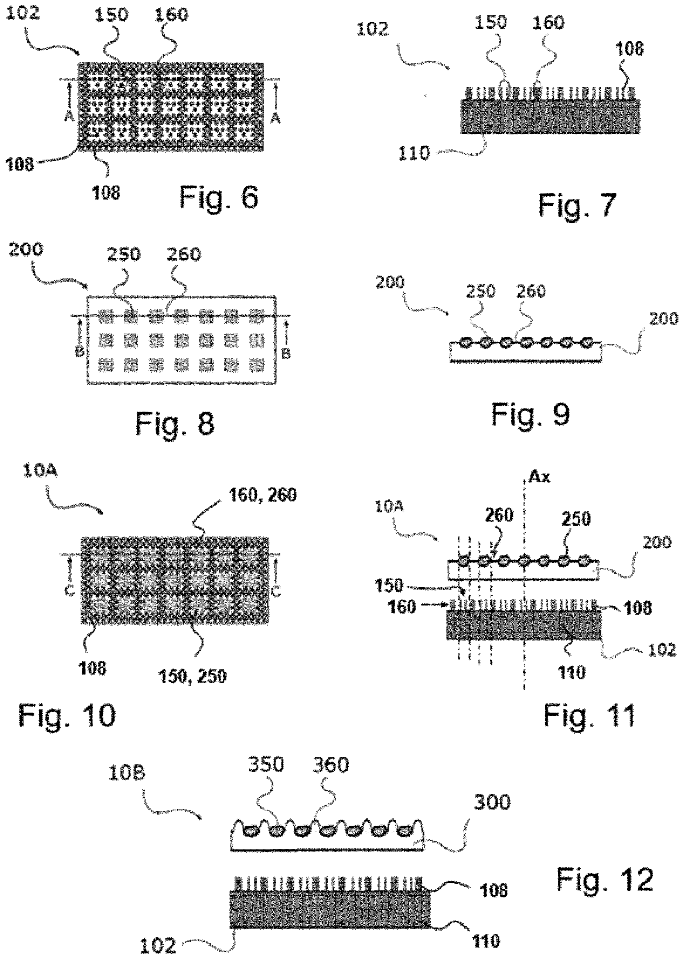

Tel que cela est notamment visible sur les figures 6 et 7 notamment, les bâtonnets électroluminescents 108 sont agencés sur un substrat 110 de forme rectangulaire, de manière à former des premières zones d'émission 150 entourées par des deuxièmes zones d'émission 160. Plus précisément, une première zone d'émission est délimitée par des deuxièmes zones d'émission. Les bâtonnets électroluminescents 108 formant les deuxièmes zones d'émission 160 sont alignés en rangées et en colonnes perpendiculaires les unes par rapport aux autres, de manière à former un quadrillage centré sur les premières zones d'émission 150. Tel qu'illustré, la densité de bâtonnets dans chacune des deuxièmes zones est nettement plus importante que celle des bâtonnets dans les premières zones d'émission. Ce rapport de densité peut être compris entre 5 et 50. Plus précisément, comme illustré à la figure 7, les bâtonnets électroluminescents 108 formant les deuxièmes zones démission peuvent définir par leur quadrillage une première zone d'émission 150 dans laquelle les bâtonnets électroluminescents sont au nombre de trois et disposés en triangle pour couvrir au mieux la surface de cette première zone d'émission. Le rapport de densité dans cet exemple est sensiblement égal à 9.

On a représenté schématiquement sur la figure 4, l'agencement des bâtonnets formant une partie d'une deuxième zone d'émission 160. Sur cette figure 4 est représenté la distance de séparation d1 de deux bâtonnets électroluminescents immédiatement adjacents dans une première direction transversale et la distance de séparation d2 de deux bâtonnets électroluminescents immédiatement adjacentes dans une deuxième direction transversale. Les distances de séparation d1 et d2 sont mesurées entre deux axes longitudinaux 122 de bâtonnets électroluminescents adjacents. Tel que cela a été précisé précédemment, le nombre de bâtonnets électroluminescents 108 s'étendant en saillie du substrat 110 varie entre les premières et deuxièmes zones d'émission, afin d'augmenter la densité lumineuse de la deuxième zone d'émission vis-à-vis de la première. On convient que l'une ou l'autre des distances de séparation d1, d2 doit être au minimum égale à 2 micromètres, afin que la lumière émise par la paroi circonférentielle 128 de chaque bâtonnet électroluminescent 108 puisse sortir de la matrice de bâtonnets. Par ailleurs, on prévoit que ces distances de séparation ne soient pas supérieures à 100 micromètres.

La source de lumière peut comporter en outre, tel qu'illustré notamment sur la figure 5, une couche 130 d'un matériau polymère formant un encapsulant dans laquelle des bâtonnets électroluminescents 108 sont au moins partiellement noyés. La couche 130 peut ainsi s'étendre sur toute l'étendue du substrat ou seulement autour d'un groupe déterminé de bâtonnets électroluminescents 108. Le matériau polymère, qui peut notamment être à base de silicone, permet de protéger les bâtonnets électroluminescents 108 sans gêner la diffusion des rayons lumineux.

La source de lumière peut comporter en outre un revêtement 132 de matériau réfléchissant la lumière qui est disposé entre les bâtonnets électroluminescents 108 pour dévier les rayons, initialement orientés vers le substrat, vers la face terminale 126 des bâtonnets électroluminescents 108. En d'autres termes, la face supérieure 116 du substrat 110 peut comporter un moyen réfléchissant qui renvoie les rayons lumineux, initialement orientés vers la face supérieure 116, vers la face de sortie de la source de lumière. On récupère ainsi des rayons qui autrement seraient perdus. Ce revêtement 132 est disposé entre les bâtonnets électroluminescents 108 sur la couche d'oxyde conducteur transparent 129.

Comme mentionné ci-dessus, la source de lumière 102 est pilotée par le module de commande 101. Le module de commande comprend une unité de calcul, une unité de mémorisation et une unité d'alimentation électrique non représentées sur les figures. L'unité de mémorisation est configurée pour mémoriser au moins un programme de pilotage de la source de lumière 102. Selon le présent exemple, le procédé de pilotage comprend une phase d'activation continue des premières zones d'émission 150 et une phase d'activation ponctuelle des deuxièmes zones d'émission 160. On comprend que de la sorte, les premières zones d'émission 150 peuvent rester activées pendant l'activation des deuxièmes zones d'émission ₁60, par exemple lorsque le dispositif lumineux est utilisé dans un feu afin de signaler dans la même surface éclairante la position, par l'éclairage via les premières zones d'émission, et le freinage, par l'éclairage via les deuxièmes zones d'émission, du véhicule. L'unité de calcul est configurée pour mettre en œuvre ce programme. L'unité d'alimentation électrique permet le fonctionnement des unités précédentes et de la source de lumière 102.

En particulier, le module de commande 101 est configuré pour activer sélectivement les premières zones d'émission 150 et/ou les deuxièmes zones d'émission 160, par l'intermédiaire d'une unique instruction du module de contrôle 101.

Tel que cela a pu être précisé précédemment, le dispositif lumineux 10 comprend un module de commande 101, une source de lumière 102 pilotée par le module de commande et un écran éclairé par la source de lumière.

Dans un premier mode de réalisation d'un dispositif lumineux 10A (visible sur les figures 10 et 11), la source de lumière 102 émet des rayons en direction d'un écran 200 d'un premier type. Selon le présent exemple, l'écran est réalisé à partir de polycarbonate (PC) ou de polyméthacrylate de méthyle (PMMA), ou bien à partir de silicone, rigide ou pas, pour transmettre au moins une partie des faisceaux lumineux émis par les premières et les deuxièmes zones d'émission. Comme illustré aux figures 8 et 9, l'écran 200 d'un premier type est une plaque de même forme et de mêmes dimensions que la surface d'émission de la source de lumière 102, définie par l'étendue des bâtonnets électroluminescents 108 sur le substrat 110.

L'écran 200 comporte au niveau d'une première 201 de ses faces des éléments diffusants délimitant des premières zones de transmission 250. Plus précisément, les dimensions et l'agencement des premières zones de transmission 250 forment un motif identique à celui des premières zones d'émission 150 sur le substrat. L'écran comporte également des deuxièmes zones de transmission 260. Plus précisément, une première zone de transmission 250 est délimitée par les deuxièmes zones transmission 260. Comme illustré à la figure 8, les deuxièmes zones de transmission peuvent définir par leur quadrillage une première zone de transmission 250 comprenant des éléments diffusants. Selon le présent exemple, le motif formé par les deuxièmes zones de transmission 260 est identique au quadrillage formé par les deuxièmes zones d'émission 160 représenté à la figure 6. Dans ce motif formé par les deuxièmes zones de transmission, les éléments diffusants peuvent notamment être obtenus par des modifications locales de la surface de l'écran, et par exemple par des modifications locales de la rugosité.

Comme illustré aux figures 10 et 11, l'écran 200 est positionné devant la source de lumière 102 de sorte que leurs faces en vis-à-vis soient parallèles entre elles. Plus précisément, les premières zones d'émission 150 émettent des faisceaux lumineux principalement selon un axe Ax parallèle à l'axe d'allongement des bâtonnets et perpendiculaire au substrat 110 et illustré sur les figures 2 et 11, et l'écran 200 est positionné de sorte que les premières zones de transmissions 250 soient perpendiculaires à ces axes d'allongement.

Par ailleurs, les premières zones de transmission 250 et d'émission 150 sont alignées lorsque l'écran 200 est positionné en vis-à-vis de la source de lumière 102, de sorte que selon la direction de l'axe Ax et le sens de propagation des rayons lumineux, et tel qu'illustré sur la figure 11, une première zone de transmission 250 est disposée en aval d'une première zone d'émission 150 et de sorte que la projection orthogonale des bords délimitant la première zone de transmission sur le substrat de la source de lumière correspond aux bords délimitant la première zone d'émission 150 correspondante.

De façon concomitante et dans les mêmes conditions que ce qui vient d'être décrit, les deuxièmes zones de transmission 260 et d'émission 160 sont alignées lorsque l'écran 200 est positionné en vis-à-vis de la source de lumière 102.

Selon le présent exemple, les premières zones de transmission 250, formant la partie diffusante de l'écran 200, sont formées par un grainage de la surface sur la première face 201 de l'écran. À titre d'exemple, le grainage peut être obtenu par un procédé de moulage ou par un traitement mécanique et/ou chimique de sa surface.

La première face 201 de l'écran 200 du premier type est la face disposée à l'opposé de la source de lumière 102 lorsque le dispositif lumineux 10A est assemblé. De la sorte, les rayons émis par les premières zones d'émission 150 de la source de lumière traversent l'épaisseur de la plaque formant l'écran 200 avant de rencontrer les éléments diffusants formant les premières zones de transmission 250 réparties sur la première face 201.

La figure 12 présente un deuxième mode de réalisation d'un dispositif lumineux 10B selon l'invention, se distinguant du précédent en ce que la source de lumière 102 est associée à un écran 300 d'un deuxième type. L'écran 300 du deuxième type se différencie de l'écran précédemment décrit en ce que les deuxièmes zones de transmission 360 comprennent des microlentilles de manière à faire converger les faisceaux lumineux émis par les deuxièmes zones d'émission 160, afin d'augmenter leur intensité lumineuse perçue par un observateur au voisinage de l'axe du véhicule.

Dans une variante non représentée de l'invention, et pouvant notamment être mise en œuvre dans le deuxième mode de réalisation, on pourrait prévoir de disposer les éléments diffusants sur la deuxième face de l'écran d'un deuxième type, étant entendu qu'on garderait intérêt à conserver les microlentilles à distance de la source de lumière, et donc sur la première face de l'écran, pour qu'elles fonctionnent.

## Revendications

1. Dispositif lumineux (10, 10A, 10B) pour véhicule automobile (2), comprenant une source de lumière (102) comportant une pluralité d'éléments émissifs (108), configurés pour former au moins une première zone d'émission (150) et une deuxième zone d'émission (160) adressables sélectivement l'une de l'autre, et un écran (200, 300) au moins partiellement transparent à la lumière émise par la source de lumière (102), comprenant des premières zones de transmission (250, 350) et des secondes zones de transmission (260, 360) agencées respectivement en vis-à-vis des premières et des deuxièmes zones d'émission, les premières zones de transmission (250, 350) étant configurées pour diffuser les faisceaux lumineux émis par les premières zones d'émission (150), **caractérisé en ce que** J Z les deuxièmes zones de transmission (360) de l'écran (300) sont configurées pour diminuer la divergence du faisceau lumineux émis par les deuxièmes zones d'émission (160).

2. Dispositif lumineux (10, 10A, 10B) selon la revendication précédente, **caractérisé en ce que** les zones d'émission de la source de lumière se distinguent par la densité et/ou la hauteur des éléments émissifs qui la composent.

3. Dispositif lumineux (10, 10A, 10B) selon la revendication précédente, **caractérisé en ce que** la densité des éléments émissifs est moins importante dans la ou les premières zones d'émission (150) que dans la ou les deuxièmes zones d'émission (160).

4. Dispositif lumineux (10, 10A, 10B) selon l'une des revendications précédentes, **caractérisé en ce que** les premières zones de transmission (250, 350) comprennent des éléments diffusants.

5. Dispositif lumineux (10, 10A, 10B) selon la revendication précédente, **caractérisé en ce que** les éléments diffusants sont présents dans l'écran et/ou à la surface de l'écran (200, 300).

6. Dispositif lumineux (10, 10A, 10B) selon l'une des revendications précédentes, **caractérisé en ce que** les deuxièmes zones de transmission (260, 360) de l'écran sont transparentes aux faisceaux lumineux émis par les deuxièmes zones d'émission (160).

7. Dispositif lumineux (10, 10A, 10B) selon l'une des revendications précédentes, **caractérisé en ce que** les premières zones d'émission (150) sont entourées par les deuxièmes zones d'émission (160).

8. Dispositif lumineux (10, 10A, 10B) selon l'une des revendications précédentes, **caractérisé en ce que** la ou les premières zones d'émission (150) émettent un faisceau lumineux d'une première couleur et que la ou les deuxièmes zones d'émission (160) émettent un faisceau lumineux d'une deuxième couleur.

9. Dispositif lumineux (10, 10A, 10B) selon l'une des revendications 1 à 7, **caractérisé en ce que** la ou les premières zones d'émission (150) émettent un faisceau lumineux d'une couleur identique à la lumière émise par la ou les deuxièmes zones d'émission (160).

10. Dispositif lumineux (10, 10A, 10B) selon l'une des revendications précédentes, **caractérisé en ce que** chaque zone d'émission comprend une pluralité d'unités électroluminescentes (108) de dimensions submillimétriques pour émettre un faisceau lumineux.

11. Système lumineux pour véhicule automobile comportant un dispositif lumineux (10, 10A, 10B) selon l'une des revendications précédentes, avec une surface d'éclairage commune à deux fonctions d'éclairage et/ou de signalisation distinctes.

12. Système lumineux selon la revendication précédente, **caractérisé en ce qu'**il forme un feu de position et un feu de jour.

13. Système lumineux selon l'une des revendications 11 ou 12, **caractérisé en ce que** les deux fonctions d'éclairage et/ou de signalisation distinctes ont chacune une teinte de blanc distincte.

14. Procédé de pilotage d'un dispositif lumineux (10, 10A, 10B) selon l'une des revendications 1 à 10, dans lequel on réalise une phase d'activation continue des premières zones d'émission (150) et une phase d'activation ponctuelle des deuxièmes zones d'émission (160).

15. Procédé de pilotage selon la revendication précédente, **caractérisé en ce que** les premières zones d'émission (150) restent activées pendant l'allumage des deuxièmes zones d'émission (160).

## Patentansprüche

1. Beleuchtungseinrichtung (10, 10A, 10B) für ein Kraftfahrzeug (2), beinhaltend eine Lichtquelle (102), die Folgendes umfasst: eine Vielzahl von emittierenden Elementen (108), die dazu konfiguriert sind, mindestens einen ersten Emissionsbereich (150) und einen zweiten Emissionsbereich (160) zu bilden, die selektiv voneinander adressierbar sind, und einen Schirm (200, 300), der für das durch die Lichtquelle (102) emittierte Licht mindestens teilweise transparent ist und erste Durchlässigkeitsbereiche (250, 350) und zweite Durchlässigkeitsbereiche (260, 360) beinhaltet, die jeweils gegenüber den ersten und den zweiten Emissionsbereichen angeordnet sind, wobei die ersten Durchlässigkeitsbereiche (250, 350) dazu konfiguriert sind, die durch die ersten Emissionsbereiche (150) emittierten Lichtstrahlen zu streuen,
**dadurch gekennzeichnet, dass** die zweiten Durchlässigkeitsbereiche (360) des Schirms (300) dazu konfiguriert sind, die Divergenz des durch die zweiten Emissionsbereiche (160) emittierten Lichtstrahls zu verringern.

2. Beleuchtungseinrichtung (10, 10A, 10B) nach dem vorhergehenden Anspruch, **dadurch gekennzeichnet, dass** sich die Emissionsbereiche der Lichtquelle durch ihre Dichte und/oder die Höhe der emittierenden Elemente, aus denen sie besteht, unterscheiden.

3. Beleuchtungseinrichtung (10, 10A, 10B) nach dem vorhergehenden Anspruch, **dadurch gekennzeichnet, dass** die Dichte der emittierenden Elemente in dem einen oder den mehreren ersten Emissionsbereichen (150) geringer ist als in dem einen oder den mehreren zweiten Emissionsbereichen (160).

4. Beleuchtungseinrichtung (10, 10A, 10B) nach einem der vorhergehenden Ansprüche, **dadurch gekennzeichnet, dass** die ersten Durchlässigkeitsbereiche (250, 350) streuende Elemente beinhalten.

5. Beleuchtungseinrichtung (10, 10A, 10B) nach dem vorhergehenden Anspruch, **dadurch gekennzeichnet, dass** sich die streuenden Elemente in dem Schirm und/oder auf der Oberfläche des Schirms (200, 300) befinden.

6. Beleuchtungseinrichtung (10, 10A, 10B) nach einem der vorhergehenden Ansprüche, **dadurch gekennzeichnet, dass** die zweiten Durchlässigkeitsbereiche (260, 360) des Schirms für die durch die zweiten Emissionsbereiche (160) emittierten Lichtstrahlen transparent sind.

7. Beleuchtungseinrichtung (10, 10A, 10B) nach einem der vorhergehenden Ansprüche, **dadurch gekennzeichnet, dass** die ersten Emissionsbereiche (150) von den zweiten Emissionsbereichen (160) umgeben sind.

8. Beleuchtungseinrichtung (10, 10A, 10B) nach einem der vorhergehenden Ansprüche, **dadurch gekennzeichnet, dass** der eine oder die mehreren ersten Emissionsbereiche (150) einen Lichtstrahl mit einer ersten Farbe emittieren und dass der eine oder die mehreren zweiten Emissionsbereiche (160) einen Lichtstrahl mit einer zweiten Farbe emittieren.

9. Beleuchtungseinrichtung (10, 10A, 10B) nach einem der Ansprüche 1 bis 7, **dadurch gekennzeichnet, dass** der eine oder die mehreren ersten Emissionsbereiche (150) einen Lichtstrahl mit einer Farbe emittieren, die mit dem Licht identisch ist, das durch den einen oder die mehreren zweiten Emissionsbereiche (160) emittiert wird.

10. Beleuchtungseinrichtung (10, 10A, 10B) nach einem der vorhergehenden Ansprüche, **dadurch gekennzeichnet, dass** jeder Emissionsbereich eine Vielzahl von Elektrolumineszenzeinheiten (108) mit Abmessungen im Submillimeterbereich beinhaltet, um einen Lichtstrahl zu emittieren.

11. Beleuchtungssystem für ein Kraftfahrzeug, das eine Beleuchtungseinrichtung (10, 10A, 10B) nach einem der vorhergehenden Ansprüche umfasst, mit einer gemeinsamen Beleuchtungsoberfläche für zwei unterschiedliche Beleuchtungs- und/oder Signalisierungsfunktionen.

12. Beleuchtungssystem nach dem vorhergehenden Anspruch, **dadurch gekennzeichnet, dass** es ein Standlicht und ein Tagfahrlicht bildet.

13. Beleuchtungssystem nach einem der Ansprüche 11 oder 12, **dadurch gekennzeichnet, dass** die zwei unterschiedlichen Beleuchtungs- und/oder Signalisierungsfunktionen jeweils einen unterschiedlichen Weißton aufweisen.

14. Verfahren zur Steuerung einer Beleuchtungseinrichtung (10, 10A, 10B) nach einem der Ansprüche 1 bis 10, bei dem eine kontinuierliche Aktivierungsphase der ersten Emissionsbereiche (150) und eine punktuelle Aktivierungsphase der zweiten Emissionsbereiche (160) umgesetzt wird.

15. Verfahren zur Steuerung nach dem vorhergehenden Anspruch, **dadurch gekennzeichnet, dass** die ersten Emissionsbereiche (150) während des Einschaltens der zweiten Emissionsbereiche (160) aktiviert bleiben.

## Claims

1. Luminous device (10, 10A, 10B) for a motor vehicle (2), said luminous device comprising a light source (102) including a plurality of emitting elements (108) that are configured to form at least one first emission zone (150) and one second emission zone (160) that are addressable selectively from each other, and a screen (200, 300) that is at least partially transparent to the light emitted by the light source (102), comprising first transmission zones (250, 350) and second transmission zones (260, 360) that are respectively arranged facing the first and second emission zones, the first transmission zones (250, 350) being configured to scatter the light beams emitted by the first emission zones (150), **characterized in that** the second transmission zones (360) of the screen (300) are configured to decrease the divergence of the light beam emitted by the second emission zones (160).

2. Luminous device (10, 10A, 10B) according to the preceding claim, **characterized in that** the emission zones of the light source differ in the density and/or the height of the emitting elements from which it is composed.

3. Luminous device (10, 10A, 10B) according to the preceding claim, **characterized in that** the density of the emitting elements is lower in the one or more first emission zones (150) than in the one or more second emission zones (160).

4. Luminous device (10, 10A, 10B) according to one of the preceding claims, **characterized in that** the first transmission zones (250, 350) comprise scattering elements.

5. Luminous device (10, 10A, 10B) according to the preceding claim, **characterized in that** the scattering elements are present in the screen and/or on the surface of the screen (200, 300).

6. Luminous device (10, 10A, 10B) according to one of the preceding claims, **characterized in that** the second transmission zones (260, 360) of the screen are transparent to the light beams emitted by the second emission zones (160).

7. Luminous device (10, 10A, 10B) according to one of the preceding claims, **characterized in that** the first emission zones (150) are encircled by the second emission zones (160).

8. Luminous device (10, 10A, 10B) according to one of the preceding claims, **characterized in that** the one or more first emission zones (150) emit a light beam of a first colour and that the one or more second emission zones (160) emit a light beam of a second colour.

9. Luminous device (10, 10A, 10B) according to one of Claims 1 to 7, **characterized in that** the one or more first emission zones (150) emit a light beam of a colour identical to the light emitted by the one or more second emission zones (160).

10. Luminous device (10, 10A, 10B) according to one of the preceding claims, **characterized in that** each emission zone comprises a plurality of electroluminescent units (108) of sub-millimetre dimensions in order to emit a light beam.

11. Luminous motor-vehicle system including a luminous device (10, 10A, 10B) according to one of the preceding claims, with a lighting area common to two distinct lighting and/or signalling functions.

12. Luminous system according to the preceding claim, **characterized in that** it forms a position light and a daytime running light.

13. Luminous system according to either of Claims 11 and 12, **characterized in that** the two distinct lighting and/or signalling functions each have a distinct white hue.

14. Method for driving a luminous device (10, 10A, 10B) according to one of Claims 1 to 10, wherein a phase of continuous activation of the first emission zones (150) and a phase of intermittent activation of the second emission zones (160) are implemented.

15. Driving method according to the preceding claim, **characterized in that** the first emission zones (150) remain activated while the second emission zones (160) are turned on.
